(19) Europäisches Patentamt
European Patent Office
Office européen des brevets

(11) **EP 3 603 417 A1**

(12) **EUROPEAN PATENT APPLICATION**
published in accordance with Art. 153(4) EPC

(43) Date of publication:
**05.02.2020  Bulletin 2020/06**

(21) Application number: **18775915.4**

(22) Date of filing: **09.02.2018**

(51) Int Cl.:
***A23L 29/10*** *(2016.01)*

(86) International application number:
**PCT/JP2018/004712**

(87) International publication number:
**WO 2018/179912 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **27.03.2017   JP 2017061323**

(71) Applicant: **Dai-Ichi Kogyo Seiyaku Co., Ltd.
Kyoto-shi, Kyoto 600-8873 (JP)**

(72) Inventors:
• **HATANO Hiroshi
kyoto-shi
Kyoto 600-8873 (JP)**
• **KUSUI Keisuke
kyoto-shi
Kyoto 600-8873 (JP)**

(74) Representative: **TBK
Bavariaring 4-6
80336 München (DE)**

(54)   **OWDER EMULSIFIER COMPOSITION, METHOD FOR MANUFACTURING POWDER EMULSIFIER COMPOSITION, AND FOOD CONTAINING POWDER EMULSIFIER COMPOSITION**

(57)   To provide a powder emulsifying agent composition having such a low bulk specific gravity that it is suitable for storage and transportation, having high water dispersibility, and being produced at high efficiency (in particular, drying efficiency), a method for producing a powder emulsifying agent composition, and a food including a powder emulsifying agent composition.

A powder emulsifying agent composition includes a saccharide (A), an ester (B) that is at least one of a sucrose fatty acid ester (B1) or a glycerin fatty acid ester (B2), and an inorganic salt (C).

**EP 3 603 417 A1**

**Description**

Technical Field

The present invention relates to a powder emulsifying agent composition, a method for producing a powder emulsifying agent composition, and a food including a powder emulsifying agent composition. More specifically, the present invention relates to a powder emulsifying agent composition having high water dispersibility and a high bulk specific gravity, a method for producing the powder emulsifying agent composition, and a food including the powder emulsifying agent composition.

Background Art

As emulsifying agents in powder confectionery materials such as cake mixes emulsifying agent compositions mainly containing propylene glycol fatty acid ester or lactylated monoglyceride have been used. However, these are not suitable for powder confectionery materials because, for example, they are unpalatable and provided in the form of paste due to fats and oils contained. Thus, various powder emulsifying agent compositions suitable for powder confectionery materials or the like have been developed (Patent Literature 1).

Citation List

Patent Literature

PTL 1: Japanese Unexamined Patent Application Publication No. 2006-55135

Summary of Invention

Technical Problem

The powder emulsifying agent composition described in PTL 1 has a high bulk specific gravity and requires large storage space. This powder emulsifying agent composition, which has a high bulk specific gravity, is less easily transported. Furthermore, this powder emulsifying agent composition tends to provide an aqueous dispersion having a high viscosity, which tends to result in low production efficiency.
The present invention has been made in order to address such existing problems. An object of the present invention is to provide a powder emulsifying agent composition having such a low bulk specific gravity that it is suitable for storage and transportation, having high water dispersibility, and being produced at high efficiency (in particular, drying efficiency), a method for producing the powder emulsifying agent composition, and a food including the powder emulsifying agent composition.

Solution to Problem

In order to achieve the object, a powder emulsifying agent composition, a method for producing a powder emulsifying agent composition, and a food including a powder emulsifying agent composition according to the present invention mainly include the following features.

(1) A powder emulsifying agent composition including a saccharide (A), an ester (B) that is at least one of a sucrose fatty acid ester (B1) or a glycerin fatty acid ester (B2), and an inorganic salt (C).
Because of this feature, the powder emulsifying agent composition has a lower bulk specific gravity than existing powder emulsifying agent compositions. For this reason, the powder emulsifying agent composition is suitable for storage and transportation. In addition, the powder emulsifying agent composition has high water dispersibility. For this reason, for the powder emulsifying agent composition, an aqueous dispersion having a high solid content concentration tends to be prepared. In addition, the aqueous dispersion has a low viscosity and is easily dried. For this reason, the powder emulsifying agent composition is easily dried and is produced at high efficiency.
(2) The powder emulsifying agent composition according to (1), wherein a content of the inorganic salt (C) relative to 100 parts by mass of the saccharide (A) is 0.01 to 3 parts by mass.
Because of this feature, the powder emulsifying agent composition has a lower bulk specific gravity. For this reason, the powder emulsifying agent composition is more suitable for storage and transportation. In addition, the powder emulsifying agent composition has higher water dispersibility. For this reason, the powder emulsifying agent composition is more easily handled during production, which results in high production efficiency.

(3) The powder emulsifying agent composition according to (1) or (2), wherein a content of the inorganic salt (C) relative to 100 parts by mass of the ester (B) is 0.01 to 3 parts by mass.

Because of this feature, the powder emulsifying agent composition has a lower bulk specific gravity. For this reason, the powder emulsifying agent composition is more suitable for storage and transportation. In addition, the powder emulsifying agent composition has higher water dispersibility. For this reason, the powder emulsifying agent composition is more easily handled during production, which results in high production efficiency.

(4) The powder emulsifying agent composition according to any one of (1) to (3), wherein the ester (B) includes, relative to 100 parts by mass of the sucrose fatty acid ester (B1), 10 to 150 parts by mass of the glycerin fatty acid ester (B2).

Because of this feature, the powder emulsifying agent composition has higher water dispersibility. For this reason, the powder emulsifying agent composition is more easily handled during production, which results in high production efficiency.

(5) A method for producing a powder emulsifying agent composition, including a drying step of drying an aqueous dispersion including a saccharide (A), an ester (B) that is at least one of a sucrose fatty acid ester (B1) or a glycerin fatty acid ester (B2), and an inorganic salt (C).

Because of this feature, the aqueous dispersion has a low viscosity and is easily dried. For this reason, the powder emulsifying agent composition is produced at high efficiency.

(6) A food including the powder emulsifying agent composition according to any one of (1) to (4).

Because of this feature, the obtained food includes the above-described powder emulsifying agent composition and hence provides a nice food texture.

Advantageous Effects of Invention

The present invention provides a powder emulsifying agent composition having such a low bulk specific gravity that it is suitable for storage and transportation, having high water dispersibility, and being produced at high efficiency (in particular, drying efficiency), a method for producing the powder emulsifying agent composition, and a food including the powder emulsifying agent composition. Description of Embodiments

<Powder emulsifying agent composition>

A powder emulsifying agent composition according to an embodiment of the present invention includes a saccharide (A), an ester (B) that is at least one of a sucrose fatty acid ester (B1) or a glycerin fatty acid ester (B2), and an inorganic salt (C). Hereinafter, these will be individually described.

(Saccharide (A))

The saccharide (A) is not particularly limited. Examples of the saccharide (A) include dextrin derivatives such as dextrin, reduced dextrin, indigestible dextrin, cyclodextrin, and branched dextrin, sucrose, fructose, glucose, lactose, maltose, and sorbitol. Such saccharides (A) may be used in combination. Of these, the saccharide (A) is, from the viewpoint of providing a powder emulsifying agent composition having high water dispersibility, preferably a dextrin derivative, more preferably dextrin.

In the powder emulsifying agent composition, the saccharide (A) content is not particularly limited. For example, the saccharide (A) content of the powder emulsifying agent composition is, from the viewpoint of providing high water dispersibility, preferably 40 mass% or more, more preferably 50 mass% or more. The saccharide (A) content of the powder emulsifying agent composition is, from the viewpoint of providing high water dispersibility, preferably 80 mass% or less, more preferably 70 mass% or less.

(Ester (B))

The ester (B) includes at least one of a sucrose fatty acid ester (B1) or a glycerin fatty acid ester (B2). From the viewpoint of providing a powder emulsifying agent composition having higher water dispersibility, the ester (B) preferably includes the sucrose fatty acid ester (B1), more preferably includes the sucrose fatty acid ester (B1) and the glycerin fatty acid ester (B2).

The fatty acids forming the sucrose fatty acid ester (B1) and the glycerin fatty acid ester (B2) are not particularly limited. The fatty acids are saturated fatty acids or unsaturated fatty acids. Such fatty acids may be used in combination.

The saturated fatty acids are not particularly limited. Examples of the saturated fatty acids include saturated fatty acids having 12 carbon atoms such as dodecanoic acid (lauric acid), saturated fatty acids having 13 carbon atoms such as tridecanoic acid, saturated fatty acids having 14 carbon atoms such as tetradecanoic acid (myristic acid), saturated fatty acids having 15 carbon atoms such as pentadecanoic acid (pentadecylic acid), saturated fatty acids having 16 carbon atoms such as hexadecanoic acid (palmitic acid), saturated fatty acids having 17 carbon atoms such as heptadecanoic acid (margaric acid), saturated fatty acids having 18 carbon atoms such as octadecanoic acid (stearic acid), saturated fatty acids having 19 carbon atoms such as nonadecanoic acid, saturated fatty acids having 20 carbon atoms such as eicosanoic acid (arachidic acid), saturated fatty acids having 22 carbon atoms such as docosanoic acid (behenic acid), and saturated fatty acids having 24 carbon atoms such as tetracosanoic acid (lignoceric acid).

The unsaturated fatty acids are not particularly limited. Examples of the unsaturated fatty acids include unsaturated fatty acids having 12 carbon atoms such as dodecenoic acid, unsaturated fatty acids having 13 carbon atoms such as tridecenoic acid, unsaturated fatty acids having 14 carbon atoms such as tetradecenoic acid, unsaturated fatty acids having 15 carbon atoms such as pentadecenoic acid, unsaturated fatty acids having 16 carbon atoms such as hexadecenoic acids (such as palmitoleic acid), unsaturated fatty acids having 17 carbon atoms such as heptadecenoic acid, unsaturated fatty acids having 18 carbon atoms such as octadecenoic acids (such as oleic acid and vaccenic acid), octadecadienoic acids (such as linoleic acid), and octadecatrienoic acids (such as (9,12,15)-linolenic acid, (6,9,12)-linolenic acid, and eleostearic acid), unsaturated fatty acids having 19 carbon atoms such as nonadecenoic acid, unsaturated fatty acids having 20 carbon atoms such as eicosadienoic acids (such as 8,11-eicosadienoic acid), eicosatrienoic acids (such as 5,8,11-eicosatrienoic acid), and eicosatetraenoic acids (such as arachidonic acid), and unsaturated fatty acids having 24 carbon atoms such as tetracosanoic acids (such as nervonic acid).

Of these fatty acids, from the viewpoint of providing a powder emulsifying agent composition having higher water dispersibility, the fatty acids are preferably saturated fatty acids, more preferably saturated fatty acids having 12 to 24 carbon atoms, still more preferably saturated fatty acids having 14 to 20 carbon atoms, particularly preferably saturated fatty acids having 16 to 18 carbon atoms.

The sucrose fatty acid ester (B1) preferably has an average esterification degree of 1 or more from the viewpoint of providing a powder emulsifying agent composition having higher water dispersibility. The average esterification degree is, from the viewpoint of providing a powder emulsifying agent composition having higher water dispersibility, preferably 2 or less, more preferably 1.8 or less, still more preferably 1.5 or less. In this embodiment, the average esterification degree is calculated using the following formula.

<How to calculate average esterification degree>

In the following formula where average esterification degree is represented by "X", OHV, MwSug, and MwFa below are substituted to calculate X.

$$\text{(Number of OH groups in single sucrose molecule} - X)$$
$$= \text{(Number of moles of OH groups in 1 g of sample)/(Number of}$$
$$\text{moles of sucrose fatty acid ester in 1 g of sample)} =$$
$$((OHV)/(1000 \times 56.11))/\{1/(MwSug + (MwFa - 18)X)\}$$

OHV: Hydroxyl value of sucrose fatty acid ester (mgKOH/g)
MwSug: Molecular weight of sucrose
MwFa: Average molecular weight of constituent fatty acid

When the sucrose fatty acid ester (B1) and the glycerin fatty acid ester (B2) are used in combination, the glycerin fatty acid ester (B2) content relative to 100 parts by mass of the sucrose fatty acid ester (B1) is preferably 10 parts by mass or more, more preferably 20 parts by mass or more, still more preferably 30 parts by mass or more. The glycerin fatty acid ester (B2) content relative to 100 parts by mass of the sucrose fatty acid ester (B1) is preferably 150 parts by mass or less, more preferably 100 parts by mass or less, still more preferably 70 parts by mass. When the glycerin fatty acid ester (B2) content relative to the sucrose fatty acid ester (B1) satisfies such a range, the resultant powder emulsifying agent composition has higher water dispersibility.

The ester (B) content is not particularly limited. For example, the ester (B) content of the powder emulsifying agent composition is, from the viewpoint of providing a powder emulsifying agent composition having higher water dispersibility, preferably 20 mass% or more, more preferably 30 mass% or more. The ester (B) content of the powder emulsifying agent composition is, from the viewpoint of providing a powder emulsifying agent composition having higher water dispersibility, preferably 60 mass% or less, more preferably 50 mass% or less.

The ester (B) content relative to the saccharide (A) is not particularly limited. For example, the ester (B) content relative to 100 parts by mass of the saccharide (A) is, from the viewpoint of providing a powder emulsifying agent composition having higher water dispersibility, preferably 20 parts by mass or more, more preferably 30 parts by mass or more, still more preferably 50 parts by mass or more. The ester (B) content relative to 100 parts by mass of the saccharide (A) is, from the viewpoint of providing a powder emulsifying agent composition having higher water dispersibility, preferably 150 parts by mass or less, more preferably 120 parts by mass or less, still more preferably 100 parts by mass or less.

When the sucrose fatty acid ester (B1) is included, the sucrose fatty acid ester (B1) content is not particularly limited. For example, the sucrose fatty acid ester (B1) content of the powder emulsifying agent composition is, from the viewpoint of providing a powder emulsifying agent composition having higher water dispersibility, preferably 0.1 mass% or more, more preferably 1 mass% or more, still more preferably 10 mass% or more, particularly preferably 20 mass% or more. The sucrose fatty acid ester (B1) content of the powder emulsifying agent composition is, from the viewpoint of providing a powder emulsifying agent composition having higher water dispersibility, preferably 50 mass% or less, more preferably 40 mass% or less.

The sucrose fatty acid ester (B1) content relative to the saccharide (A) is not particularly limited. For example, the sucrose fatty acid ester (B1) content relative to 100 parts by mass of the saccharide (A) is, from the viewpoint of providing a powder emulsifying agent composition having higher water dispersibility, preferably 5 parts by mass or more, more preferably 10 parts by mass or more, still more preferably 20 parts by mass or more. The sucrose fatty acid ester (B1) content relative to 100 parts by mass of the saccharide (A) is, from the viewpoint of providing a powder emulsifying agent composition having higher water dispersibility, preferably 120 parts by mass or less, more preferably 100 parts by mass or less, still more preferably 80 parts by mass or less.

When the glycerin fatty acid ester (B2) is included, the glycerin fatty acid ester (B2) content is not particularly limited. For example, the glycerin fatty acid ester (B2) content of the powder emulsifying agent composition is, from the viewpoint of providing a powder emulsifying agent composition having higher water dispersibility, preferably 0.1 mass% or more, more preferably 1 mass% or more, still more preferably 5 mass% or more, particularly preferably 10 mass% or more. The glycerin fatty acid ester (B2) content of the powder emulsifying agent composition is, from the viewpoint of providing a powder emulsifying agent composition having higher water dispersibility, preferably 40 mass% or less, more preferably 30 mass% or less.

The glycerin fatty acid ester (B2) content relative to the saccharide (A) is not particularly limited. For example, the glycerin fatty acid ester (B2) content relative to 100 parts by mass of the saccharide (A) is, from the viewpoint of providing a powder emulsifying agent composition having higher water dispersibility, preferably 3 parts by mass or more, more preferably 5 parts by mass or more, still more preferably 10 parts by mass or more. The glycerin fatty acid ester (B2) content relative to 100 parts by mass of the saccharide (A) is, from the viewpoint of providing a powder emulsifying agent composition having higher water dispersibility, preferably 100 parts by mass or less, more preferably 80 parts by mass or less, still more preferably 50 parts by mass or less.

(Inorganic salt (C))

The inorganic salt (C) is not particularly limited. Examples of the inorganic salt (C) include chlorides such as sodium chloride, potassium chloride, and magnesium chloride; sulfates such as sodium sulfate, potassium sulfate, and magnesium sulfate; and phosphates such as disodium hydrogenphosphate and sodium dihydrogenphosphate. Such inorganic salts (C) may be used in combination. Of these, the inorganic salt (C) is, from the viewpoint of providing a powder emulsifying agent composition having higher water dispersibility, preferably a sulfate or a potassium salt.

The inorganic salt (C) content of the powder emulsifying agent composition is not particularly limited. For example, the inorganic salt (C) content of the powder emulsifying agent composition is, from the viewpoint of providing a powder emulsifying agent composition having high water dispersibility, preferably 0.1 mass% or more, more preferably 0.4 mass% or more. The inorganic salt (C) content of the powder emulsifying agent composition is, from the viewpoint of providing a powder emulsifying agent composition having high water dispersibility, preferably 3 mass% or less, more preferably 1 mass% or less.

The inorganic salt (C) content relative to the saccharide (A) is not particularly limited. For example, the inorganic salt (C) content relative to 100 parts by mass of the saccharide (A) is, from the viewpoint of providing a powder emulsifying agent composition having higher water dispersibility and a lower bulk specific gravity, preferably 0.01 parts by mass or more, more preferably 0.02 parts by mass or more, still more preferably 0.03 parts by mass or more. The inorganic salt (C) content relative to 100 parts by mass of the saccharide (A) is, from the viewpoint of providing a powder emulsifying agent composition having higher water dispersibility and a lower bulk specific gravity, preferably 3 parts by mass or less, more preferably 1 part by mass or less, still more preferably 0.5 parts by mass or less.

The inorganic salt (C) content relative to the ester (B) is not particularly limited. For example, the inorganic salt (C) content relative to 100 parts by mass of the ester (B) is, from the viewpoint of providing a powder emulsifying agent composition having higher water dispersibility and a lower bulk specific gravity, preferably 0.01 parts by mass or more, more preferably 0.03 parts by mass or more, still more preferably 0.05 parts by mass or more. The inorganic salt (C) content relative to 100 parts by mass of the ester (B) is, from the viewpoint of providing a powder emulsifying agent composition having higher water dispersibility and a lower bulk specific gravity, preferably 3 parts by mass or less, more preferably 1 part by mass or less, still more preferably 0.5 parts by mass or less.

When the sucrose fatty acid ester (B1) is included as the ester (B), the inorganic salt (C) content relative to the sucrose fatty acid ester (B1) is not particularly limited. For example, the inorganic salt (C) content relative to 100 parts by mass of the sucrose fatty acid ester (B1) is, from the viewpoint of providing a powder emulsifying agent composition having higher water dispersibility and a lower bulk specific gravity, preferably 0.01 parts by mass or more, more preferably 0.03 parts by mass or more, still more preferably 0.05 parts by mass or more. The inorganic salt (C) content relative to 100 parts by mass of the sucrose fatty acid ester (B1) is, from the viewpoint of providing a powder emulsifying agent composition having higher water dispersibility and a lower bulk specific gravity, preferably 3 parts by mass or less, more preferably 1 part by mass or less, still more preferably 0.5 parts by mass or less.

When the glycerin fatty acid ester (B2) is included as the ester (B), the inorganic salt (C) content relative to the glycerin fatty acid ester (B2) is not particularly limited. For example, the inorganic salt (C) content relative to 100 parts by mass of the glycerin fatty acid ester (B2) is, from the viewpoint of providing a powder emulsifying agent composition having higher water dispersibility and a lower bulk specific gravity, preferably 0.01 parts by mass or more, more preferably 0.03 parts by mass or more, still more preferably 0.05 parts by mass or more. The inorganic salt (C) content relative to 100 parts by mass of the glycerin fatty acid ester (B2) is, from the viewpoint of providing a powder emulsifying agent composition having higher water dispersibility and a lower bulk specific gravity, preferably 3 parts by mass or less, more preferably 1 part by mass or less, still more preferably 0.5 parts by mass or less.

(Optional component)

The powder emulsifying agent composition according to this embodiment may appropriately include an optional component. Examples of the optional component include organic acid monoglycerin fatty acid ester, polyglycerin fatty acid ester, sorbitan fatty acid ester, and lecithin.

In summary, the powder emulsifying agent composition according to this embodiment has a lower bulk specific gravity than existing powder emulsifying agent compositions. For this reason, the powder emulsifying agent composition is suitable for storage and transportation. In addition, the powder emulsifying agent composition has high water dispersibility. For this reason, the powder emulsifying agent composition can be provided at a higher solid content concentration. In addition, the obtained aqueous dispersion has a low viscosity and is easily dried. For this reason, the powder emulsifying agent composition is easily dried, which results in high production efficiency.

More specifically, the powder emulsifying agent composition according to this embodiment has an apparent density (bulk specific gravity) of, for example, about 0.65 to about 0.90, which is measured in accordance with JIS K 3362. For the powder emulsifying agent composition, in the case of preparing, for example, a 30 mass% aqueous dispersion, it may have a viscosity of about 100 to about 300 (mPa·s), which is measured at 50°C, in accordance with JIS Z 8803, and with a BM-type viscometer. Thus, the powder emulsifying agent composition according to this embodiment has a relatively low viscosity and is easily handled. The aqueous dispersion is easily dried by a drying step described later, which results in high production efficiency of the powder emulsifying agent composition.

The powder emulsifying agent composition according to this embodiment is preferably applicable to foods, for example. The foods are not particularly limited. Examples of the foods include baked sweets, bakery products, snack foods, and cakes. Such foods including the powder emulsifying agent composition provide nice food textures. The powder emulsifying agent composition content of foods is not particularly limited. For example, the powder emulsifying agent composition content of foods is about 20 to about 50 mass%.

<Method for producing powder emulsifying agent composition>

A method for producing a powder emulsifying agent composition according to an embodiment of the present invention includes a drying step of drying an aqueous dispersion including a saccharide (A), an ester (B) that is at least one of a sucrose fatty acid ester (B1) or a glycerin fatty acid ester (B2), and an inorganic salt (C). The saccharide (A), the ester (B), and the inorganic salt (C) are the same as those described above.

(Drying step)

The drying step is a step of drying the aqueous dispersion including the saccharide (A), the ester (B) that is at least one of the sucrose fatty acid ester (B1) or the glycerin fatty acid ester (B2), and the inorganic salt (C). The aqueous dispersion is appropriately prepared before the drying step. Specifically, the aqueous dispersion may be prepared by adding, to a predetermined amount of water, a mixture of the saccharide (A), the ester (B), and the inorganic salt (C), and appropriately mixing the mixture using a homomixer, for example.

The resultant aqueous dispersion is dried by spray drying or flash drying, for example. Of these, from the viewpoint of providing a powder emulsifying agent composition having high water dispersibility, preferred drying methods are spray drying and flash drying. The drying conditions are not particularly limited. For example, the drying conditions are inlet temperatures of 150°C or less and outlet temperatures of 75°C or less.

The mixture having been dried may be appropriately subjected to a step of sifting the mixture depending on particle size (classification step). This provides a powder emulsifying agent composition.

The obtained powder emulsifying agent composition is not particularly limited in terms of weight-average particle size. For example, the weight-average particle size may be about 30 to about 80 $\mu$m. In this embodiment, the weight-average particle size is measured by a particle size distribution analyzer.

In summary, in this embodiment, the aqueous dispersion has a low viscosity and is easily dried. Thus, the powder emulsifying agent composition is produced at high efficiency.

EXAMPLES

Hereinafter, the present invention will be more specifically described with reference to Examples. The present invention is not limited to these Examples at all.

The following are ingredients used.

Sucrose fatty acid ester 1: sucrose stearic acid ester (average esterification degree: 1.1)
Sucrose fatty acid ester 2: sucrose stearic acid ester (average esterification degree: 1.2)
Sucrose fatty acid ester 3: sucrose stearic acid ester (average esterification degree: 1.4)
Sucrose fatty acid ester 4: sucrose palmitic acid ester (average esterification degree: 1.2)
Monoglycerin fatty acid ester 1: monoglycerin stearic acid ester

<Examples 1 to 14 and Comparative Examples 1 to 4>

Water (3000 g) and 1000 g of a mixture satisfying proportions (unit: parts by mass) described in Table 1 below were mixed using a homomixer at 70°C, to prepare an aqueous dispersion. Such obtained aqueous dispersions were subjected to spray drying using a spray dryer having an atomizer that was a rotary disc (inlet temperature: 120°C, outlet temperature: 65°C, feed rate of aqueous dispersion: 6 L/hour), to prepare powder emulsifying agent compositions.

<Example 15>

A powder emulsifying agent composition was prepared by the same procedures as in Example 3 except that the spray dryer was replaced by a flash dryer (DRYMEISTER DMR (manufactured by Hosokawa Micron Corporation), inlet temperature: 120°C, outlet temperature: 65°C, feed rate of aqueous dispersion: 6 L/hour).

[Table 1]

| | Examples | | | | | | | | | | | | | | | Comparative Examples | | | |
|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 1 | 2 | 3 | 4 |
| Dextrin | 100 | 100 | 100 | 100 | 100 | 100 | 100 | 100 | 100 | 100 | 100 | 100 | 100 | 100 | 100 | 100 | 100 | 100 | 100 |
| Sucrose fatty acid ester 1 | | | | | 45 | | | | | | | | | | | | | | |
| Sucrose fatty acid ester 2 | 70 | 55 | 45 | 35 | | | | 45 | 45 | 45 | 45 | 45 | 45 | 45 | 45 | 70 | 45 | 70 | 45 |
| Sucrose fatty acid ester 3 | | | | | | 45 | | | | | | | | | | | | | |
| Sucrose fatty acid ester 4 | | | | | | | 45 | | | | | | | | | | | | |
| Monoglycerin fatty acid ester 1 | | 20 | 25 | 20 | 25 | 25 | 25 | 25 | 25 | 25 | 25 | 25 | 25 | 25 | 25 | | 25 | | 25 |
| Sodium sulfate | | | | | | | | 0.1 | | | | | | | | | | | |
| Potassium sulfate | 0.1 | 0.1 | 0.1 | 0.1 | 0.1 | 0.1 | 0.1 | | | | | 0.06 | 0.2 | 0.1 | 0.1 | | | | |
| Magnesium sulfate | | | | | | | | | 0.1 | | | | | | | | | | |
| Disodium hydrogenphosphate | | | | | | | | | | 0.1 | | | | | | | | | |
| Magnesium chloride | | | | | | | | | | | 0.1 | | | | | | | | |
| Casein sodium | | | | | | | | | | | | | | | | | | 0.1 | 0.1 |

The obtained powder emulsifying agent compositions were evaluated in terms of viscosity of aqueous dispersions and bulk specific gravity by the following evaluation methods. The results are described in Table 2.

(Viscosity of aqueous dispersions)

The viscosity (mPa·s) of the aqueous dispersions was measured in accordance with JIS Z 8803, at 50°C, and with a BM-type viscometer.

(Bulk specific gravity)

The apparent density of the powder emulsifying agent compositions was measured in accordance with JIS K 3362.

[Table 2]

| | Examples | | | | | | | | | | | | | | | Comparative Examples | | | |
|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 1 | 2 | 3 | 4 |
| Bulk specific gravity | 0.69 | 0.78 | 0.79 | 0.78 | 0.78 | 0.78 | 0.77 | 0.77 | 0.76 | 0.76 | 0.76 | 0.77 | 0.77 | 0.74 | 0.71 | 0.51 | 0.59 | 0.53 | 0.57 |
| Viscosity of aqueous dispersion | 730 | 185 | 150 | 165 | 160 | 165 | 170 | 180 | 185 | 190 | 190 | 175 | 170 | 190 | 190 | 2710 | 1250 | 2520 | 1020 |

As described in Table 2, powder emulsifying agent compositions according to the present invention each have a high bulk specific gravity and a small volume per unit quantity. The aqueous dispersions of powder emulsifying agent compositions according to the present invention each have a low viscosity, which has demonstrated ease of handling during production.

**Claims**

1. A powder emulsifying agent composition comprising a saccharide (A), an ester (B) that is at least one of a sucrose fatty acid ester (B1) or a glycerin fatty acid ester (B2), and an inorganic salt (C).

2. The powder emulsifying agent composition according to Claim 1, wherein a content of the inorganic salt (C) relative to 100 parts by mass of the saccharide (A) is 0.01 to 3 parts by mass.

3. The powder emulsifying agent composition according to Claim 1 or 2, wherein a content of the inorganic salt (C) relative to 100 parts by mass of the ester (B) is 0.01 to 3 parts by mass.

4. The powder emulsifying agent composition according to any one of Claims 1 to 3, wherein the ester (B) includes, relative to 100 parts by mass of the sucrose fatty acid ester (B1), 10 to 150 parts by mass of the glycerin fatty acid ester (B2).

5. A method for producing a powder emulsifying agent composition, comprising a drying step of drying an aqueous dispersion including a saccharide (A), an ester (B) that is at least one of a sucrose fatty acid ester (B1) or a glycerin fatty acid ester (B2), and an inorganic salt (C).

6. A food comprising the powder emulsifying agent composition according to any one of Claims 1 to 4.

## INTERNATIONAL SEARCH REPORT

| International application No. |
|---|
| PCT/JP2018/004712 |

### A. CLASSIFICATION OF SUBJECT MATTER
Int.Cl. A23L29/10(2016.01)i

According to International Patent Classification (IPC) or to both national classification and IPC

### B. FIELDS SEARCHED

Minimum documentation searched (classification system followed by classification symbols)
Int.Cl. A23L29/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
DWPI(Thomson Innovation)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 4-299935 A (AMAKOSU KK) 23 October 1992, claims, examples 1-6<br>(Family: none) | 1-3, 5-6<br>4 |
| X<br>Y | JP 2001-17093 A (NOF CORPORATION) 23 January 2001, examples 1-4<br>(Family: none) | 1, 4, 6<br>4 |

☒ Further documents are listed in the continuation of Box C.    ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 23.04.2018 | 01.05.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2018/004712 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-357532 A (OGAWA & CO., LTD.) 24 December 2004, abstract, etc. (Family: none) | 1-6 |

Form PCT/ISA/210 (continuation of second sheet) (January 2015)

**REFERENCES CITED IN THE DESCRIPTION**

**Patent documents cited in the description**

• JP 2006055135 A